**Europäisches Patentamt**

**European Patent Office**

**Office européen des brevets**

(11) Veröffentlichungsnummer: **0 482 532 A2**

## EUROPÄISCHE PATENTANMELDUNG

(21) Anmeldenummer: **91117851.5**

(22) Anmeldetag: **18.10.91**

(51) Int. Cl.5: **G06F 13/42**

(30) Priorität: **20.10.90 DE 4033464**

(43) Veröffentlichungstag der Anmeldung:
**29.04.92 Patentblatt 92/18**

(84) Benannte Vertragsstaaten:
**AT BE CH DE ES FR GB IT LI NL SE**

(71) Anmelder: **GERT FISCHER GmbH**
**Daimlerstrasse 5-7**
**W-4151 Willich 1(DE)**

(72) Erfinder: **Fischer, Gert**
**Neusser Strasse 56**
**W-4040 Kaarst(DE)**

(74) Vertreter: **Zenz, Joachim Klaus, Dipl.-Ing. et al**
**Patentanwälte Zenz, Helber & Hosbach Am**
**Ruhrstein 1**
**W-4300 Essen 1(DE)**

(54) **Anordnung zur selektiven Kopplung mehrerer Module mit einem Prozessor.**

(57) Jeder der mit einem Prozessor (1) zu koppelnden Module (3, 4, $4_1$, $4_2$..$4_x$) enthält einen Mikrokontroller (7) zur internen Steuerung der Stromversorgung und der Rangierwege und zum Status- und Informationsaustausch mit gekoppelten Modulen und mit dem Prozessor. Der Mikrokontroller (7) ist mit einem Bedienungs- und Anzeigefeld zur Betätigung und Anzeige durch und für den Benutzer gekoppelt. Alle Module einer Baugruppe können über ihre Mikrokontroller und moduleigene Ein- und Ausgänge selektiv in Reihe geschaltet und über einen gemeinsamen Bus (5) mit dem Prozessor gekoppelt werden. Jeder Mikrokontroller hat Mittel zur Bildung eines Abschlußwiderstandes, die dann von dem Mikrokontroller wirksam gemacht werden, wenn der zugehörige Modul der in der Modulreihe letzte Modul ($4_x$) ist. Jedem Modul ist eine vom Mikrokontroller (7) verwaltete Kennung zum Unterscheiden der Module, zur Kommunikation der Module untereinander und mit dem Prozessor und zur Zugriffsanforderung auf den Modul und auf einen Datenbus zugeordnet. Mit dieser Anordnung können beliebige aktive und passive Datenverarbeitungsmodule, mit wenigstens einem Prozessor zu einer Funktionsgruppe zusammengefaßt und in ihrer Konfiguration geändert und erweitert werden.

Fig.1

EP 0 482 532 A2

Rank Xerox (UK) Business Services
(-/2.17/2.0)

Die Erfindung betrifft eine Anordnung und ein Verfahren zur selektiven Kopplung mehrerer Module, insbesondere Plattenlaufwerke und Speichermodule mit einem Prozessor. Unter dem Begriff "Prozessor" wird in der folgenden Beschreibung irgendeine Einrichtung zur Datenverarbeitung, beispielsweise ein Mikroprozessor, ein Computer oder auch ein Großrechner verstanden.

Die Mikrocomputertechnik hat in jüngster Zeit eine immer breitere Akzeptanz gefunden. Hier wurden vor allem auf den Gebieten der Bürokommunikation, der Konstruktion, der Informationsübertragung und im industriellen sowie im konstruktiven Bereich immer weitergehende Aufgaben zugewiesen. Existierende Systeme kommen daher bereits nach kurzer Zeit und teilweise lange vor Erreichen ihrer normalen Lebensdauer an die Grenze ihrer funktionellen und kapazitiven Möglichkeit. Etwa erforderliche Speichererweiterungen, der Anschluß zusätzlicher Floppy- oder Festplattenlaufwerke sowie zusätzlicher Eingabe- und Ausgabegeräte, wie Laserdrucker, Laserdisk usw. sind nicht oder nur mit erheblichem Installationsaufwand möglich. Insofern ist der Benutzer bisher vielfach dazu übergegangen, anstelle einer Systemerweiterung einen Systemwechsel auf ein leistungsstärkeres System vorzunehmen. Die hiermit verbundenen Kosten sind erheblich. Die Erweiterung vorhandener Systeme erfordert eine spezielle Anpassung und Einstellung der zusätzlichen Baueinheiten. U.a. muß die an einem Bus letzte Baueinheit mit einem geeigneten Busabschlußwiderstand versehen werden. Daneben gibt es weitere, für jedes zusätzliche Laufwerk einzustellende Betriebsoptionen, wie z.B. einen Schreibschutz. Diese Einstellungen werden beispielsweise durch Jumper oder DIP-Schalter auf einer Leiterkarte der Baueinheit ermöglicht. Bei der Installation jeder neuen Baueinheit, z.B. eines neuen Laufwerks, sind von einem mit dem Gesamtsystem vertrauten Techniker die Betriebsoptionen zu setzen; für den Anwender ist das Setzen von Jumpern oder DIP-Schaltern zu aufwendig, zumal es erhebliche Fachkenntnisse bedingt.

Durch den Einsatz verschiedener Betriebssysteme, z.B. DOS, UNIX, OS/2 erhöht sich der Bedarf einer flexiblen Anordnung von Festplatten-Baueinheiten des Systems. Ohne aufwendige Änderungen der aktiven Partitionen einer Festplatte kann jeweils nur ein Betriebssystem von einer Festplatte gebootet (d.h. beim System-Reset oder Warmstart geladen) werden. Der Anwender sollte jedoch zur Erleichterung der Kommunikation mit unterschiedlichen Betriebssystemen die Möglichkeit haben, durchaus verschiedene Betriebssysteme in der eigenen Maschine ohne großen Aufwand booten zu können.

Der Erfindung liegt die Aufgabe zugrunde, den Installationsaufwand zu verringern, wenn beliebige aktive und passive Datenverarbeitungsmodule, beispielsweise Plattenlaufwerke, andere Speicher und/oder Peripheriegeräte miteinander und mit wenigstens einem Prozessor zu einer Funktions- oder Baugruppe zusammengefaßt werden oder ihre Konfiguration geändert oder erweitert wird. Insbesondere soll die Neu- und Umkonfiguration einer beliebigen Anzahl von Geräten und Modulen durch den Benutzer selbst erfolgen können.

Gelöst wird diese Aufgabe erfindungsgemäß dadurch, daß jeder der mit dem Prozessor zu koppelnden Module einen Mikrokontroller zur internen Steuerung der Stromversorgung und der Rangierwege (Jumper) und zum Status- und Informationsaustausch mit den gekoppelten Modulen und dem Prozessor und ein mit dem Mikrokontroller gekoppeltes Bedienungs- und Anzeigefeld zur Betätigung und Anzeige durch und für den Benutzer aufweist; daß alle Module einer Baugruppe über ihre Ein- und Ausgänge selektiv in Reihe schaltbar und über einen gemeinsamen Bus mit dem Prozessor koppelbar sind; daß jedem Mikroprozessor Mittel zur Bildung eines Bus-Abschlußwiderstandes zugeordnet sind, die dann wirksam sind, wenn der zugehörige Modul der in der Reihe letzte Modul ist; und daß jedem Modul eine vom Mikrokontroller verwaltete Kennung zur Unterscheidung der Module der Baugruppe, zur Kommunikation der Module untereinander und mit dem Prozessor und zur Zugriffsanforderung auf den Modul zugeordnet ist.

Die Erfindung macht es möglich, einem vorhandenen Datenverarbeitungssystem extern einen beliebigen Modul, beispielsweise einen Festplattenmodul oder andere Massenspeicher oder Peripheriegeräte, aber auch ein weiteres Rechnersystem beizustellen und funktionell zu verknüpfen. Diese Verknüpfung mit dem Prozessor kann problemlos vom Anwender selbst konfiguriert und beliebig geändert werden. Der jedem einzelnen Modul zugeordnete Mikrokontroller übernimmt die bisher bei Systemänderungen oder -erweiterungen erforderlichen aufwendigen Rangierfunktionen in der Regel selbsttätig. Insbesondere sorgt der Mikrokontroller des in der Reihe letzten Moduls für den stets erforderlichen Busabschlußwiderstand. Die spezielle Funktion des Massenspeichers oder Peripheriegeräts des Moduls ist für die erfindungsgemäß vorgesehene Einbindung in die Funktions- oder Baugruppe ohne Bedeutung. Der Benutzer ist daher in der Lage, das vorhandene System durch eine oder mehrere Festplatten zu erweitern, von denen ggf. verschiedene Betriebssysteme für den Prozessor durch Kalt- oder Warmstart geladen werden können. Die verschiedenen Massenspeicher können bei der Erfindung auch bei Nichtbenutzung aus der Baugruppe herausgenommen und geschützt vor dem Zugriff unberechtigter Benutzer anderenorts aufbewahrt werden. Später können sie problemlos und unabhängig von der physikalischen Einbau-Reihenfolge wieder in das System eingebunden werden. Ein weiterer Vorteil der Erfindung liegt darin, daß im Falle eines Defekts des Prozessors ein oder mehrere Module aus dem System entnommen und in Verbindung mit einem anderen Rechner ohne komplizierte Anpassung an das neue Systemumfeld weiterbenutzt werden können.

In Weiterbildung der Erfindung ist jedem Mikrokontroller ein vorzugsweise elektrisch programmierbarer Programmspeicher und ein Direktzugriffsspeicher zugeordnet. Durch geeignete Programmierung des Programmspeichers sind die beim Einbau eines Moduls in eine bestehende Baugruppe erforderlichen Maßnahmen beschränkt auf die rein elektrischen Anschlüsse und wenige, per Tastendruck aufrufbare Einbindebefehle.

Eine universelle Systemerweiterung wird vor allem dadurch begünstigt, daß ein Netzteilmodul zur Stromversorgung der zu einer Bau- oder Funktionsgruppe zusammengeschalteten Module vorgesehen ist.

Obwohl sich die Erfindung grundsätzlich auch in Verbindung mit mehreren intelligenten Systemen verwenden läßt, die ohne besondere Priorität auf den Datenbus zum Prozessor zugreifen können, ist bei einem bevorzugten Ausführungsbeispiel der Erfindung vorgesehen, daß einer der zu einer Baugruppe zusammengeschalteten Module als Master ausgebildet und geeignet ist, den als Slave-Modulen organisierten anderen Baugruppenmodulen Kennungen zuzuweisen und alle Baugruppenmodule zu konfigurieren.

Das Verfahren zur selektiven Kopplung mehrerer Module mit einem Prozessor zeichnet sich erfindungsgemäß dadurch aus, daß ein Eingang eines ersten Moduls über einen Datenbus mit dem Prozessor verbunden wird; mehrere weitere Module in Reihe an den Ausgang des ersten Moduls angeschaltet werden, wobei die Verbindung von Modul zu Modul jeweils über ein Datenkabel hergestellt wird und der Datenbus des in der Reihe letzten angekoppelten Moduls mit einem Abschlußwiderstand abgeschlossen wird; und die gekoppelten Module konfiguriert werden, indem: mindestens einer der weiteren Module durch gleichzeitiges Betätigen jeweils einer Selektionstaste an dem mindestens einen weiteren Modul und einer Konfigurations-Taste am ersten Modul selektiert und mit dem ersten Modul zu einer ersten logischen Konfigurationsgruppe gekoppelt und die selektive Kopplung in der Konfigurationsgruppe durch Betätigen einer Enter-Taste am ersten Modul bestätigt wird.

Weitere Einzelheiten und vorteilhafte Weiterbildungen der Erfindung sind in den Unteransprüchen gekennzeichnet.

Im folgenden wird die Erfindung anhand eines in der Zeichnung dargestellten Ausführungsbeispiels näher erläutert. In der Zeichnung zeigen:

Fig. 1 ein Blockschaltbild eines Ausführungsbeispiels der Erfindung, bei dem mehrere Festplattenmodule, die über einen Netzteil- und Mastermodul mit Strom versorgt werden, als variierbare Baugruppe an einen Prozessor angeschaltet sind;

Fig. 2 ein Blockschaltbild der wesentlichen Komponenten eines Ausführungsbeispiels eines der in Fig. 1 gezeigten Module; und

Fig. 3 die Frontplatten mit den Bedienungs- und Anzeigefeldern von drei Modulen in dem Ausführungsbeispiel gemäß Fig. 1.

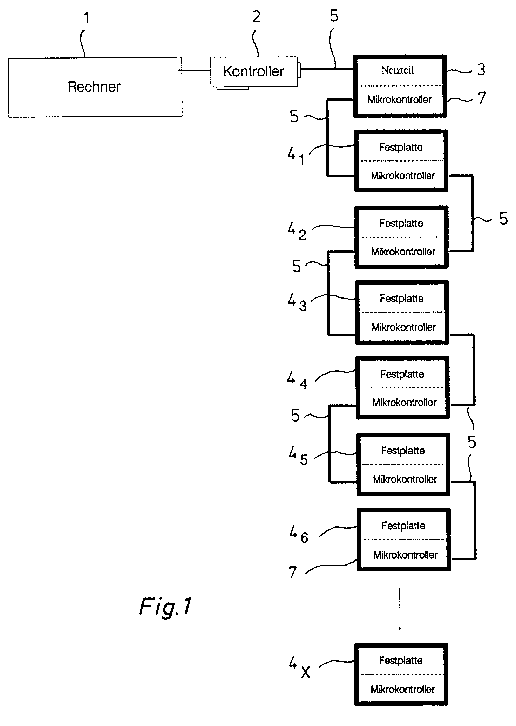

In dem in Fig. 1 dargestellten Ausführungsbeispiel sind einem Rechner 1 eine Reihe von Modulen $3, 4_1 \ldots 4_x$ zugeordnet. Die Module $3, 4_1 \ldots 4_x$ sind untereinander und mit dem Rechner über einen Bus $5_1, 5_2$ verbunden, der vom Rechner 1 über einen Bus-Kontroller 2 angesteuert wird. Der Datenbus $5_1$ verbindet den Bus-Kontroller 2 und den ersten Modul 3 und dient zum Informations- und Datenaustausch der Module $3, 4_1 \ldots 4_x$ mit dem Rechner 1. Alle zu einer Baugruppe vereinigten Module 3 und $4_1 \ldots 4_x$ sind über Datenkabel $5_2$ verbunden, wobei jeweils ein Datenkabel zwei Module derart verbindet, daß die Module die in Fig. 1 dargestellte Kette bilden. Wie weiter unten noch erläutert werden wird, ist in jedem Datenkabel eine Datenbusanordnung vorgesehen.

Jeder Modul weist eine Funktionseinheit, beispielsweise eine Festplatteneinheit, ein Floppy-Disk-Laufwerk oder ein anderes Peripheriegerät, auf und hat einen Mikrokontroller, über den die einzelnen Module untereinander Informationen und Zustandssignale austauschen können. Der erste Modul 3 enthält als besondere Funktionseinheit ein Netzteil zur Stromversorgung aller nachgeschalteten, d.h. zur selben Baugruppe gehörigen Module. Dadurch wird das Netzteil des Rechners 1 entlastet und eine zuverlässige und unabhängige Stromversorgung für eine begrenzte Anzahl von Modulen sichergestellt. Die Stromversorgung der restlichen Module erfolgt durch zusätzliche, im Datenkabel $5_2$ enthaltene Leitungen.

Die Daten- und Informationsleitungen des Busses $5_1$ sind auch in den Datenkabeln $5_2$ weitergeführt. Die Datenkabel $5_2$ enthalten zusätzliche Steuerleitungen zum Austausch von Informationen und Steuerbefehlen zwischen den Mikrokontrollern 7 der Module $3, 4_1 \ldots 4_x$. Die Funktionseinheiten (z.B.

Festplatten - Fig. 1) der Module $4_1$ ... $4_x$ können in bekannter Weise über ihre Schnittstellen auf den Datenbus der Datenkabel $5_2$ zugreifen. Zusätzlich können die Mikrokontroller 7 der Module 3, $4_1$ ... $4_x$ über ausgewählte Leitungen des Datenbus untereinander seriell Daten austauschen, wenn zu diesem Zeitpunkt kein Datenaustausch der Funktionseinheiten über diese Leitungen des Datenbus stattfindet.

Im bevorzugten Ausführungsbeispiel ist der Modul 3 als Master-Modul ausgebildet. Er weist neben dem Netzteil Steuereinrichtungen zum Konfigurieren der Baugruppe auf. Wie weiter unten noch erläutert werden wird, ist zu diesem Zweck ein besonderes Bedienungs- und Anzeigefeld vorgesehen. Die anderen Module $4_1$ ... $4_x$ sind als Slave-Module ausgebildet und dem Master-Modul zugeordnet.

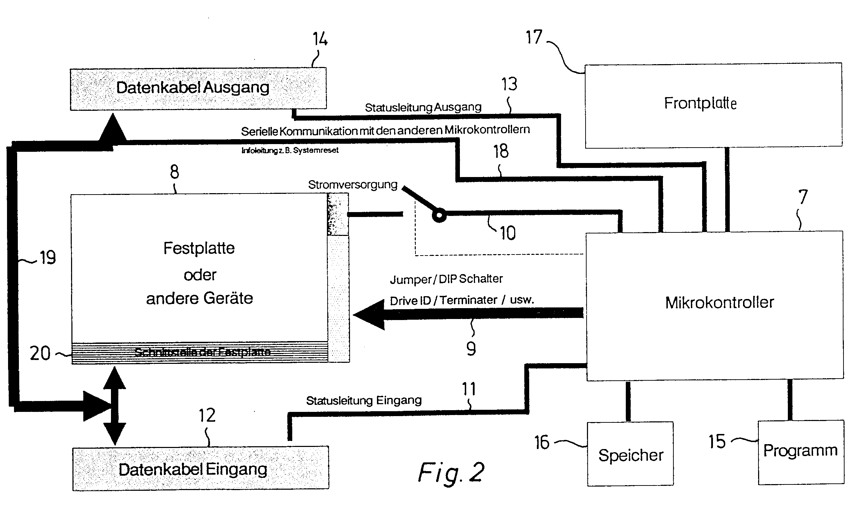

Der Aufbau der zu dem System gemäß Fig. 1 gehörigen Einzelmodule ist als Beispiel in Fig. 2 gezeigt. Der Modul weist eine Funktionseinheit 8 (beispielsweise eine Festplatte), einen Mikrokontroller 7 mit zugeordnetem ROM 15 zur Speicherung von Programmen und zugeordnetem Informationsspeicher 16 (beispielsweise einem EEPROM) sowie eine Frontplatte 17 mit Bedienungs- und Anzeigefeld auf. Der Modul besitzt zwei Schnittstellen, einen Datenkabel-Eingang 12 und einen Datenkabel-Ausgang 14, über die er mit Hilfe der Datenkabel 5 mit anderen Modulen verbunden werden kann. Der über ein Datenkabel $5_2$ am Datenkabel-Eingang 12 anliegende Datenbus wird intern über den Datenbus 19 zum Datenkabel-Ausgang 14 und dann ggf. über ein weiteres Datenkabel $5_2$ zum nächsten Modul geführt. An diesen Datenbus 19 ist über eine Ankopplung 21 die Schnittstelle 20 der Funktionseinheit 8, beispielsweise der Festplatte, angekoppelt. Ein Anschlußport 22 des Mikrokontrollers 7 ist über Statusleitungen 11 mit dem Datenkabel-Eingang 12 verbunden. Ein Ausgangs-Anschlußport 23 des Mikrokontrollers 7 ist über Statusleitungen 13 mit dem Datenkabel-Ausgang 14 verbunden. Über Leitungen 9 stellt der Mikrokontroller 7 Optionen der Funktionseinheit 8 ein. Solche Optionen betreffen entweder die Arbeitsweise der Funktionseinheit selbst (z.B. Schreibschutz, Parität) oder die Ankopplung der Funktionseinheit 8 an den Datenbus 19 (Zuschaltung eines Busabschlußwiderstandes). Ferner steuert der Mikrokontroller 7 die Stromversorgung der Funktionseinheit 8 über die Leitung 10. Der Mikrokontroller 7 kann über die Statusleitungen 11 und 13 sowie zusätzlich über die an den Datenbus 19 angekoppelte serielle Datenleitung 18 mit den anderen Modulen Daten und Steuerinformationen austauschen. Durch die Kopplung mit dem Bedienungs- und Anzeigefeld 17 kann der Mikrokontroller 7 durch Bedieneraktionen ausgelöste Signale empfangen und über die Anzeigen Signale ausgeben.

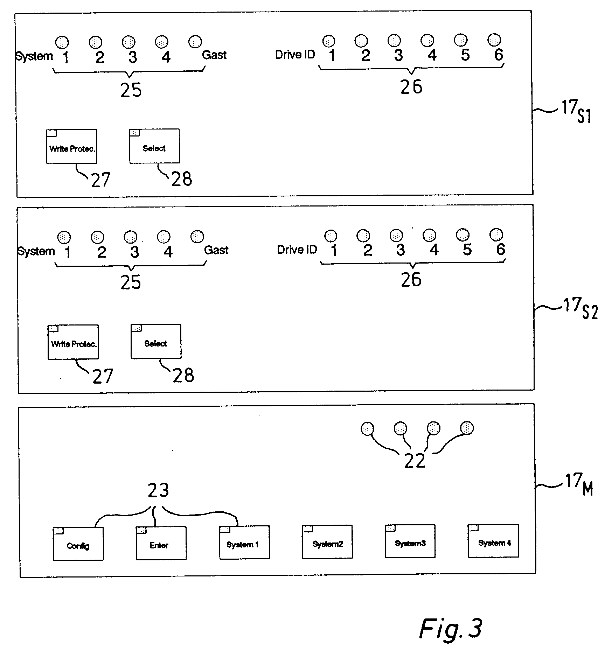

Fig. 3 zeigt die Frontplatten $17_M$, $17_{S2}$, $17_{S1}$ der Module einer Baugruppe aus einem Master-Modul und zwei aufgesetzten Slave-Modulen. Anhand dieses Ausführungsbeispiels soll die Zusammenschaltung und Konfigurierung der Module erläutert werden. Zunächst wird ein Eingang des Master-Moduls 3 über einen Datenbus $5_1$ mit dem Prozessor 1 verbunden. Auf dem Master-Modul 3 werden in beliebiger Reihenfolge die ihm zuzuordnenden Slave-Module $4_1$ ... $4_x$ turmartig aufgesetzt und über Datenkabel-Eingänge 12 und Datenkabel-Ausgänge 14 paarweise verbunden. Der oberste Slave-Modul $4_x$ des Turmes weist somit einen freien Datenkabel-Ausgang 14 auf.

Das Konfigurieren einer Baugruppe geschieht in folgender Weise: Zuerst wird am Master-Modul ($17_M$) eine Systemgruppe durch Drücken einer System-Taste 24 ausgewählt. Zunächst sei angenommen, daß alle Module einer Baugruppe derselben Systemgruppe (System 1) zugeordnet sind. Nach dem Drücken der System-Taste 24 wird am Master-Modul ($17_M$) die Konfigurations-Taste 29 (Config) und gleichzeitig am selektierten Slave-Modul (z.B. $17_{S1}$) die Selektions-Taste 28 (Select) gedrückt. Wenn der selektierte Modul ($17_{S1}$) unkonfiguriert ist, wird diese Konfigurationsanforderung akzeptiert. Dies wird dadurch angezeigt, daß die Tasten-LED der drei Tasten 24a, 28a, 29a (Config 29 und System-1 24 am Master-Modul und Select 28 am Slave-Modul) aufleuchten. Dann kann zur Bestätigung der Zuordnung die Enter-Taste 30 am Master-Modul gedrückt werden. Die Konfiguration wird damit bestätigt und abgespeichert, und die LED's 28a, 29a, 30a erlöschen.

Die durch dieses Verfahren hergestellte erste logische Konfigurationsgruppe kann beispielsweise ein erstes logisches Laufwerk (z.B. Laufwerk C) des Prozessors 1 bilden. Anschließend kann dieses Verfahren an einem zweiten Slave-Modul ($17_{S2}$) wiederholt werden. Dabei wird eine zweite logische Konfigurationsgruppe aus dem zweiten Slave-Modul ($17_{S2}$) und dem Master-Modul ($17_M$) gebildet. Dem zweiten Slave-Modul wird die nächste freie (zweite) logische Modul-Bezeichnung (z.B. Laufwerk D) der ersten Systemgruppe zugeordnet.

In einem nichtlöschbaren Speicher des Master-Moduls 3 ist eine bereits im Herstellungsprozeß vergebene Seriennummer (Identifikationscode oder Kennung) gespeichert, die den Master-Modul eindeutig identifiziert. Beim Konfigurieren übernehmen die Slave-Module (automatisch) die Kennung des Master-Moduls. Alle Module (Master- und Slave-Module) einer neu konfigurierten Baugruppe besitzen somit eine gemeinsame Kennung. Im normalen Anwendungsfall behalten sie diese Kennung für die gesamte weitere Einsatzzeit.

Die Zuordnung der Slave-Module zu einer der Systemgruppen (im Beispiel Systemgruppe 1) wird durch die LED 25 am zugehörigen Slave-Modul angezeigt. Die der logischen Konfigurationsgruppe zugeordnete Nummer wird durch die LED's 26 angezeigt.

Die Zuordnung der Slave-Module und des Master-Moduls zu den Konfigurationsgruppen wird in den Informationsspeichern 16 (Fig. 2) gespeichert. Die einmal gespeicherte Konfiguration bleibt auch dann erhalten, wenn die Baugruppe demontiert und anschließend in einer anderen physikalischen Reihenfolge wieder zusammengesetzt wird.

Es ist auch möglich, mehrere Slave-Module beim Konfigurieren gleichzeitig anzuwählen. Dadurch erscheinen die Slave-Module dem Rechner 1 als eine einzige Systemeinheit der Systemgruppe, z.B. als ein einziges logisches Laufwerk mit der akkumulierten Kapazität der Laufwerkseinheiten der Slave-Module. Im dargestellten Ausführungsbeispiel nach Fig. 3 können demnach beide Slave-Module ($17_{S1}$ und $17_{S2}$) gemeinsam mit dem Master-Modul ($17_M$) der ersten Konfigurationsgruppe zugeordnet werden. Wird in diesem Fall die Baugruppe demontiert und später nur einer der beiden Slave-Module ($17_{S2}$) wieder aufgesetzt, so zeigt sich die Unvollständigkeit der Konfigurationsgruppe am Blinken der zugeordneten LED 26. Slave-Module einer unvollständigen Konfigurationsgruppe können nicht aktiviert werden.

Die Konfigurationsgruppen einer Baugruppe (eines Turms) können selektiv verschiedenen Systemgruppen (System 1, System 2, ...) zugeordnet werden. Dies geschieht durch Anwahl der entsprechenden Systemtasten 24 am Master-Modul ($17_M$) vor dem Konfigurieren. Im bevorzugten Ausführungsbeispiel kann jede der vier Systemgruppen bis zu sechs Konfigurationsgruppen (d.h. beispielsweise sechs logische Laufwerke: C, D, E, F, G, H) aufweisen. Während des Betriebs der Baugruppe (des Turms) ist jeweils eine Systemgruppe durch Drücken der entsprechenden Systemtaste 24 aktivierbar. Die aktive Systemgruppe wird durch die LED's 31 am Master-Modul ($17_M$) angezeigt.

Die Systemgruppen ermöglichen ein einfaches Laden unterschiedlicher Betriebssysteme (z.B. DOS, UNIX, OS/2) beim Rücksetzen oder Warmstarten des Rechners 1. Dazu ist die jeweils erste Konfigurationsgruppe einer Systemgruppe als Laufwerkseinheit mit den zum Booten des Betriebssystems notwendigen Dateien ausgebildet.

Module können mit beliebigen anderen Master-Modulen gekoppelt werden. Wird ein auf einem ersten Master-Modul (mit einer ersten Kennung) konfigurierter Slave-Modul anderenorts auf einen anderen Master-Modul (mit einer anderen Kennung) aufgesetzt, so erkennt die Baugruppe den Slave-Modul als Gast-Modul. Dies wird durch Aufleuchten der Gast-LED der LED-Anzeige 25 des Slave-Moduls angezeigt.

Zur Erhöhung der Betriebssicherheit der Tastensteuerung sind alle o.g. Tasten 24, 27-30 nichtrastend ausgebildet und mit einer LED-Anzeige 24a, 27a-30a in der Taste versehen. Die Tasten werden durch die Mikrokontroller 7 abgefragt, die mit Hilfe der im Programmspeicher 15 gespeicherten Programme unsinnige und fehlerhafte Tastenkombinationen erkennen und mit Hilfe einer zeitlichen Steuerung ("time-out-Überprüfung") eine richtige Reihenfolge des Drückens der Tastenkombinationen überprüfen. Konfigurationsänderungen erfordern stets das gleichzeitige Drücken mehrerer Tasten und eine anschließende Bestätigung durch die Enter-Taste 30 am Master-Modul.

**Patentansprüche**

1. Anordnung zur selektiven Kopplung mehrerer Module ($3, 4_1 \dots 4_x$), insbesondere Plattenlaufwerke und Speichermodule, mit wenigstens einem Prozessor (1),

   **dadurch gekennzeichnet,**

   daß jeder der mit dem Prozessor (1) zu koppelnden Module ($3, 4_1, 4_2..4_x$) einen Mikrokontroller (7) zur internen Steuerung der Stromversorgung (10) und der Rangierwege und zum Status- und Informationsaustausch (11, 13, 18) mit gekoppelten Modulen und mit dem Prozessor und ein mit dem Mikrokontroller (7) gekoppeltes Bedienungs- und Anzeigefeld (17) zur Betätigung und Anzeige durch und für den Benutzer aufweist;

   daß alle Module einer Baugruppe über ihre Ein- und Ausgänge (12, 14) selektiv in Reihe schaltbar und über einen gemeinsamen Bus (5) mit dem Prozessor (1) koppelbar sind,

   daß jedem Mikrokontroller (7) Mittel zur Bildung eines Abschlußwiderstandes zugeordnet sind, die dann wirksam sind, wenn der zugehörige Modul der in der Reihe letzte Modul ($4_x$) ist; und

   daß jedem Modul eine vom Mikrokontroller (7) verwaltete Kennung zum Unterscheiden der Module, zur Kommunikation der Module untereinander und mit dem Prozessor und zur Zugriffsanforderung auf den Modul zugeordnet ist.

2. Anordnung nach Anspruch 1, dadurch gekennzeichnet,

   daß die Module ($3, 4_1 \dots 4_x$) über einen von Modul zu Modul und durch die Module hindurch geführten Bus (5; 19, 11, 13) paralleler Leitungen in Reihe geschaltet sind,

daß der Bus paralleler Leitungen einen innerhalb des Moduls ohne Unterbrechung vom Moduleingang (12) zum Modulausgang (14) geführten ersten Bus (Datenbus) (19) und einen zweiten Bus (11, 13) aufweist,

daß jeder Modul über eine Ankopplung (21) an den ersten Bus (19) angebunden ist und auf ihn (19) zugreifen kann,

daß der Mikrokontroller (7) in den zweiten Bus (11, 13) (Steuerbus) zwischen Moduleingang (12) und Modulausgang (14) eingebunden ist und

daß der Mikrokontroller (7) des letzten Moduls $(4_x)$ der Reihenschaltung den Bus-Abschlußwiderstand mit der Ankopplung (21) verbindet.

3. Anordnung nach Anspruch 1 oder 2, dadurch gekennzeichnet, daß jedem Mikrokontroller $(4_1 ..4_x)$ ein vorzugsweise programmierbarer Programmspeicher (15) und ein Direktzugriffsspeicher (16) zugeordnet sind.

4. Anordnung nach einem der Ansprüche 1 bis 3, dadurch gekennzeichnet, daß ein Netzteilmodul (3) zur Stromversorgung der zu einer Baugruppe zusammengeschalteten Module $(4_1..4_x)$ vorgesehen ist.

5. Anordnung nach einem der Ansprüche 1 bis 4, dadurch gekennzeichnet, daß einer der zu einer Baugruppe zusammengeschalteten Module $(3, 4_1..4_x)$ als Master (3) ausgebildet und derart eingerichtet ist, daß er als Slave-Modul $(4_1...4_x)$ organisierten anderen Baugruppen-Modulen Kennungen zuweisen und alle Module konfigurieren kann.

6. Anordnung nach Anspruch 5, dadurch gekennzeichnet, daß die Slave-Module $(4_1...4_x)$ selektiv mehreren Systemgruppen zugeordnet sind, wobei jeweils eine Systemgruppe aktiv und durch den Prozessor (1) ansprechbar ist, und daß der Master-Modul (3) mindestens eine der Zahl der Systemgruppen entsprechende Zahl von Konfigurationstasten (29, 30) und Systemauswahltasten (24) zum Aufrufen und Konfigurieren der Slave-Module $(4_1...4_x)$ sowie eine entsprechende Anzahl von separat ansteuerbaren Kontrollanzeigen (31) aufweist.

7. Anordnung nach einem der Ansprüche 1 bis 6, dadurch gekennzeichnet, daß auf dem Bedienungs- und Anzeigefeld $(17_{S1}, 17_{S2})$ wenigstens eines Teils der Module $(4_1, 4_2...)$ Modul-Selektionstasten (28) und/oder Schreibschutztasten (27) und Kontrollanzeigen (25, 26) vorgesehen sind.

8. Anordnung nach einem der Ansprüche 1 bis 7, dadurch gekennzeichnet, daß die Mikrokontroller (7) der zu einer Baugruppe gehörigen Module $(4_1..4_x)$ über eine serielle Informationsleitung (18) miteinander gekoppelt sind, wobei die serielle Informationsleitung (18) an ausgewählte Leitungen des gemeinsamen Busses (5, 19) angekoppelt ist.

9. Anordnung nach einem der Ansprüche 2 bis 8, dadurch gekennzeichnet, daß jeweils zwei benachbarte Module $(4_1, 4_2, 4_3)$ durch ein Datenkabel (5) miteinander gekoppelt sind, in welchem die ersten und zweiten Busse parallel geführt sind.

10. Verfahren zur selektiven Kopplung mehrerer Module $(3, 4_1 ... 4_x)$ mit einem Prozessor (1) unter Verwendung der Anordnung nach einem der Ansprüche 1 bis 9,
dadurch gekennzeichnet, daß

(a) ein Eingang eines ersten Moduls (3) über einen Datenbus $(5_1)$ mit dem Prozessor (1) verbunden wird;

(b) mehrere weitere Module $(4_1 ... 4_x)$ in Reihe an den Ausgang (14) des ersten Moduls (3) angeschaltet werden, wobei die Verbindung von Modul zu Modul $(4_1 ... 4_x)$ jeweils über ein Datenkabel $(5_2)$ hergestellt wird und der Datenbus des in der Reihe letzten angekoppelten Moduls $(4_x)$ mit einem Abschlußwiderstand abgeschlossen wird; und

(c) die gekoppelten Module $(3, 4_1 ... 4_x)$ konfiguriert werden, indem:

(c1) mindestens einer der weiteren Module $(4_1 ... 4_x)$ durch gleichzeitiges Betätigen jeweils einer Selektionstaste an dem mindestens einen weiteren Modul $(4_1 ... 4_x)$ und einer Konfigurations-Taste am ersten Modul (3) selektiert und mit dem ersten Modul (3) zu einer ersten logischen Konfigurationsgruppe gekoppelt und

(c2) die selektive Kopplung in der Konfigurationsgruppe durch Betätigen einer Enter-Taste am ersten Modul (3) bestätigt wird.

11. Verfahren nach Anspruch 10, dadurch gekennzeichnet, daß der Selektier-Schritt und der Bestätigungs-Schritt zum Koppeln weiterer Module $(4_1 ... 4_x)$ in weiteren Konfigurationsgruppen wiederholt werden, bis alle weiteren Module $(4_1 ... 4_x)$ einer der Konfigurationsgruppen zugeordnet sind.

12. Verfahren nach Anspruch 10 oder 11, dadurch gekennzeichnet, daß ein Akzeptier-Signal ausgegeben wird, wenn jeder der im Selektionsschritt ausgewählten Module ($4_1$ ... $4_x$) unkonfiguriert ist und daß der Bestätigungs-Schritt beim Konfigurieren nur dann ausgeführt wird, wenn das Akzeptier-Signal angezeigt wird.

13. Verfahren nach einem der Ansprüche 10 bis 12, dadurch gekennzeichnet, daß mehrere Systemgruppen nacheinander beim Konfigurieren gebildet werden, indem vor der Selektion der Module eine der jeweils zu selektierenden Systemgruppe zugeordnete System-Taste am ersten Modul (3) betätigt wird, und daß die Zuordnung der Konfigurationsgruppe zur selektierten Systemgruppe durch den Bestätigungsschritt bestätigt wird.

*Fig.1*

Fig. 2

14 Datenkabel Ausgang

17

13 Statusleitung Ausgang

Frontplatte

Serielle Kommunikation mit den anderen Mikrokontrollern

Infoleitung z. B. Systemreset

18

8

Stromversorgung

10

7

19

Festplatte oder andere Geräte

Jumper / DIP Schalter

Drive ID / Terminater / usw.

Mikrokontroller

20

Schnittstelle der Festplatte

9

11

Statusleitung Eingang

12 Datenkabel Eingang

16 Speicher

15 Programm

System ○ 1 ○ 2 ○ 3 ○ 4 ○ Gast     Drive ID ○ 1 ○ 2 ○ 3 ○ 4 ○ 5 ○ 6

25     26

Write Protec. 27     Select 28

17 S1

System ○ 1 ○ 2 ○ 3 ○ 4 ○ Gast     Drive ID ○ 1 ○ 2 ○ 3 ○ 4 ○ 5 ○ 6

25     26

Write Protec. 27     Select 28

17 S2

○ ○ ○ ○
22

23

Config     Enter     System 1     System2     System3     System 4

17 M

Fig. 3